# EUROPEAN PATENT APPLICATION

(11) **EP 2 538 184 A2**
(43) Date of publication of application: **26.12.2012**
(21) Application number: 12172496.7
(22) Date of filing: 18.06.2012
(51) Int. Cl.: G01H 1/00

(54) **Rule-based diagnostics apparatus and method for rotating machinery**

(30) Priority: 22.06.2011 US 201113166524
(71) Applicant: Honeywell International Inc., Morristown, NJ 07962-2245 (US)
(72) Inventor: Kar, Chinmaya, Morristown, NJ New Jersey 07962-2245 (US)
(74) Representative: Houghton, Mark Phillip

(57) **Abstract**

A method includes obtaining (202) information associated with a machine (104) having one or more components, where the information includes multiple rules (108) associated with the one or more components. The method also includes receiving (206) measurements of a vibration level of the machine and generating (208), based on the measurements, one or more feature values for one or more features associated with the one or more components. The method further includes determining (210) a component-related condition for the one or more components based on the one or more feature values and the rules. In addition, the method includes providing (212) an indicator identifying the component-related condition

## Description

### TECHNICAL FIELD

This disclosure relates generally to control systems. More specifically, this disclosure relates to a rule-based diagnostics apparatus and method for rotating machinery.

### BACKGROUND

Machinery that performs some type of physical work typically generates physical vibrations as a function of its operation. For example, an electric motor can generate vibrations due to small levels of imbalance of its shaft, misalignment of its shaft relative to its load, or excessive bearing clearance caused by wear. Even radial variations of the motor's armature relative to the field windings of the motor can be generated. In many cases, a motor or other rotating machinery may be expected to generate certain levels of vibrations during its normal operation. However, increased vibration levels can be experienced for various reasons, such as failure or wear of one or more of its components caused by prolonged use.

Conventional techniques for monitoring the health of rotating machines have included vibration monitoring, acoustic or noise signature analysis, motor current signature analysis, and oil analysis. However, machines may function significantly different from one another, even those having the same make, model number, and time of manufacture. This may be due to a number of factors, such as manufacturing, installation, or measurement errors and differences in operating conditions. As a result, conventional techniques for monitoring the health of rotating machines have generally been inadequate.

### SUMMARY

This disclosure provides a rule-based diagnostics apparatus and method for rotating machinery.

In a first embodiment, a method includes obtaining information associated with a machine having one or more components, where the information includes multiple rules associated with the one or more components. The method also includes receiving measurements of a vibration level of the machine and generating, based on the measurements, one or more feature values for one or more features associated with the one or more components. The method further includes determining a component-related condition for the one or more components based on the one or more feature values and the rules. In addition, the method includes providing an indicator identifying the component-related condition.

In a second embodiment, an apparatus includes at least one memory unit configured to store information associated with a machine having one or more components, where the information includes multiple rules associated with the components of the machine. The apparatus also includes at least one processing unit configured to receive measurements of a vibration level of the machine. The at least one processing unit is also configured to generate, based on the measurements, one or more feature values for one or more features associated with the one or more components. The at least one processing unit is further configured to determine a component-related condition for the one or more components based on the one or more feature values and the rules. In addition, the at least one processing unit is configured to provide an indicator identifying the component-related condition.

In a third embodiment, a computer readable medium embodies a computer program. The computer program includes computer readable program code for obtaining information associated with a machine having one or more components, where the information includes multiple rules associated with the one or more components. The computer program also includes computer readable program code for receiving measurements of a vibration level of the machine and generating, based on the measurements, one or more feature values for one or more features associated with the one or more components. The computer program further includes computer readable program code for determining a component-related condition for the one or more components based on the one or more feature values and the rules. In addition, the computer program includes computer readable program code for providing an indicator identifying the component-related condition.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:

FIGURE 1 illustrates an example rule-based diagnostic system (RBDS) according to this disclosure;

FIGURE 2 illustrates an example process for vibration analysis using one or more rules according to this disclosure;

FIGURES 3 through 8 illustrate example processes for identifying specific types of faults with different types of rotating machinery according to this disclosure; and

FIGURES 9 through 11 illustrate example health indicators for different types of rotating machinery according to this disclosure.

### DETAILED DESCRIPTION

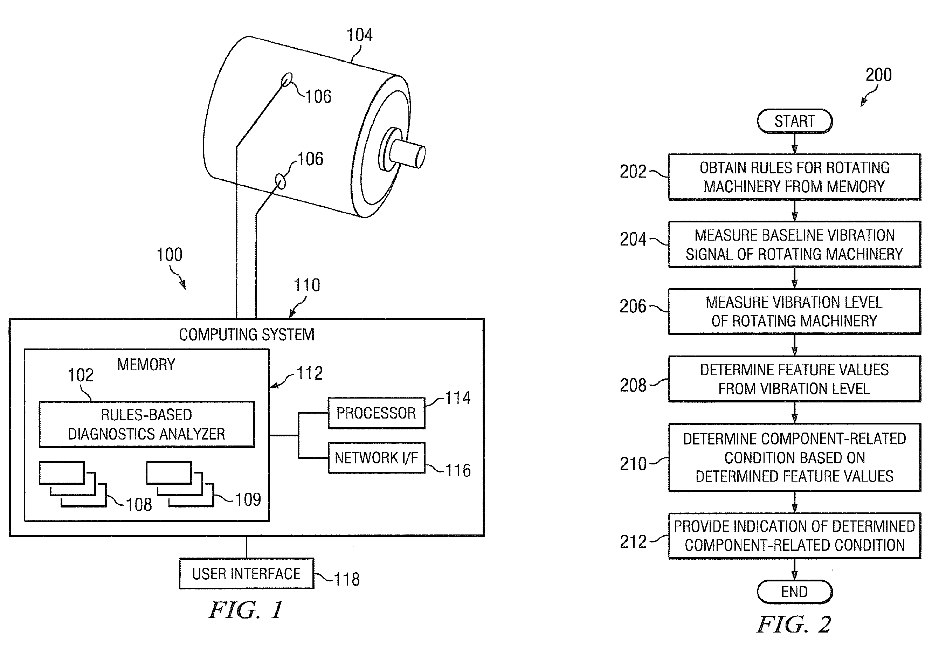

FIGURES 1 through 11, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

FIGURE 1 illustrates an example rule-based diagnostic system (RBDS) 100 according to this disclosure. As shown in FIGURE 1, the RBDS 100 includes a rule-based diagnostics analyzer 102, which analyzes signals representing physical vibrations of a machine 104 during its operation. For example, the analyzer 102 can receive signals from one or more vibration transducers 106 physically coupled to or otherwise associated with the machine 104 and analyze the received signals to determine the health or operational status of the machine 104. As particular examples, the analyzer 102 may measure a vibration level generated by one or more components of the machine 104, determine a component-related condition for at least one component according to various rules 108, and output any identified component-related conditions.

Almost all machines include multiple components that function together to perform the machine's intended purpose. For example, a centrifugal pump may include one or more shafts, bearings to support the shafts in a frame or housing, an impeller to provide motive force to a material to be pumped, and a gearbox for transferring power to the pump. Each of these components may have an operational lifespan that decreases due to various factors, such as changes in operating parameters or interactions with other machines. A fault in any component may lead to a loss in reliability of that component. If the fault is not serviced, it may potentially cause secondary damage to other components in the machine, as well as to components of other machines coupled to the machine. If not detected and corrected in a timely manner, catastrophic failure of the machinery may result. Therefore, correction of faults in individual components of the machine 104 may be useful for reducing the level and extent of damage incurred by the machine 104 during its operation.

Vibration levels of the machine 104 may be measured to determine the condition or health of the machine 104. However, conventional analysis of vibration levels generated by machines may be relatively complex. For example, a machine may include numerous components, each of which may contribute a small portion of the overall vibration level generated by the machine during its operation. Thus, although a particular component may be critical to the operation of the machine, a fault in this particular component may contribute a relatively small portion of the overall vibration level generated by the machine. As another example, a machine's vibration signature may vary significantly according to various factors external to the machine itself, such as the environment in which the machine is operating, the type of load driven by the machine, or the source of power driving the machine.

In many cases, conventional vibration analysis techniques may be limited in the quality of information they provide. For example, conventional vibration analysis techniques may attempt to identify features that are not normalized with respect to baseline signature measurements. As such, the conventional techniques are based on absolute values and thresholds and not necessarily on specific factors that a machine may encounter. Thus, conventional techniques typically do not generate information as to how any fault with a machine has progressed. They typically only generate information when certain thresholds are exceeded. Also, these conventional techniques typically use rules that are difficult to understand for users not skilled in vibration analysis. Moreover, many conventional techniques do not provide rules or thresholds that are easily configurable. In addition, conventional techniques often do not provide component-related condition indicators, such as those related to a specific component of a machine.

In accordance with this disclosure, the RBDS 100 provides configurable rules that isolate vibrational signatures generated by machines according to their individual components. The RBDS 100 also determines component-related conditions for the components of the machine 104 according to one or more features associated with each component. Thus, operators of the RBDS 100 who are not experts in conventional machine analysis techniques can identify potential faults in a machine 104 down to its component level. Also, others who are knowledgeable in machine diagnostic techniques may configure, adapt, or change the rules 108 of the RBDS 100 to tailor its operation for use with various types and classes of machines.

The machine 104 represents any device for which a vibrational analysis may be desired. Examples of the machine 104 may include electric, gas, or steam turbines, fans, pumps, generators, impellers, or any other device that may generate physical vibrations during its operation. The machine 104 may include multiple components that function together to provide a function provided by the machine 104. For instance, an electric motor may include a shaft on which an armature is mounted, a housing for containing one or more field windings, and bearings that maintain the shaft in a relatively fixed position relative the housing. Each of these components may generate its own individual vibrational signature during operation. Thus, for each machine 104 analyzed by the analyzer 102, membership functions or other functions may be generated to at least partially isolate vibrational energy for each component in order to analyze the health of the machine 104 on a sub-system basis.

Each of the vibration transducers 106 represents any type of device that converts vibrational energy into signals representing the vibrational energy. In some embodiments, the vibration transducers 106 may include one or more accelerometers that measure vibrational energy along one or more orthogonal directions. Accelerometers may include, for example, electro-magnetic or piezo-electric elements for converting vibrational energy into electrical signals.

The RBDS 100 may include other or additional types of sensors that receive and process other or additional types of information associated with the machine 104. Examples may include voltage or current sensors that measure electrical power generated or used by the machine 104 and optical sensors the measure visible or other light emitted by the machine 104. As a particular example, the RBDS 100 may include a tachometer that generates signals representing the rotational speed of a shaft in the machine 104. Using information provided by a tachometer or other suitable speed-measuring device, the RBDS 100 can correlate received vibrational signals with the speed of the shaft to determine shaft-related faults, such as shaft imbalance, shaft misalignment, and/or looseness. An example of a process for identifying shaft-related faults using measurements of vibrational energy generated by a machine and the speed of its shaft(s) is described in U.S. Patent Application No. 13/166,205 titled "SEVERITY ANALYSIS APPARATUS AND METHOD FOR SHAFTS OF ROTATING MACHINERY" (DOCKET NO. H0027864-0103), which is hereby incorporated by reference.

In some embodiments, the analyzer 102 determines component-related conditions of components in the machine 104 using a baseline signature measurement acquired at an earlier point in time. For example, vibration signals may be received by the analyzer 102 from a machine 104 when the machine is operating properly, and these signals can be used to form a baseline signature measurement that is stored in memory. Later, vibration measurements may again be received and processed against the stored baseline signature measurements. This allows an identification of component-related conditions based on changes in the baseline signature measurements versus the current measurements. An example of such a process for processing received vibration signals against baseline vibration signals is described in U.S. Patent Application No. 13/166,098 titled "VIBRATION SEVERITY ANALYSIS APPARATUS AND METHOD FOR ROTATING MACHINERY" (DOCKET NO. H0028020-0103), which is hereby incorporated by reference. Using baseline measurements, the vibrational energy processed by the analyzer 102 may be in any suitable form (such as norm, standard deviation, or root mean square of the amplitude). Because baseline information is known, the form of vibrational energy processed by the analyzer 102 may be simply calculated as a ratio of the current measurements versus the baseline measurements.

The RBDS 100 may therefore provide a user-friendly platform for determining component-related conditions of various components of one or more machines 104. The RBDS 100 may include rules 108 that are associated with specific components of a machine 104, such as its shaft, impeller vanes, or bearings. The RBDS 100 may also be provided with a default set of rules 108 for certain types and classes of components. For example, the RBDS 100 may be provided with a default set of rules 108 for commonly-used components like shafts, bearings, gears, and impellers. This default set of rules 108 may be modified by a user or additional rules 108 can be added to adapt the RBDS 100 to determine component-related conditions for other components of a machine 104.

The component-related conditions identified by the RBDS 100 may represent any suitable conditions. For example, the conditions may include specific failure modes of a machine's components. Failure modes of a centrifugal pump may include bearing wear, bearing point source defects, shaft unbalance, shaft looseness, and shaft misalignment. Failure modes of a gearbox may include gear/pinion wear, gear cracks, and pinion cracks. Failure modes of an impeller may include impeller wear, impeller cracks, and cavitations faults.

The RBDS 100 may also provide a default set of thresholds or limits 109 for the rules 108 depending on the types of failure modes associated with the components. The RBDS 100 may allow for the configuration of these rules 108 and any associated threshold values 109 by users according to their levels of expertise. For example, users of the RBDS 100 may have differing levels of access to the configuration of the rules 108 and thresholds 109 according to their login sessions or other access technique. Thus, certain users may be provided only with the ability to use the RBDS 100 with an existing configuration of rules, while other users may be granted permission to configure and otherwise modify, add, or delete the rules and thresholds on an as-needed basis.

The rules 108 may include features that are selected according to pertinent failure mode characteristics of a machine. For example, a component such as a cog having a gear crack failure mode may use measureable features like energy in a gear mesh frequency (GMF) and its harmonics and energy in the sidebands of the GMF and its harmonics. These features may be categorized according to their respective baseline features so that the progression of a failure mode from normal operation can be tracked. In some embodiments, categorizing features according to failure modes and processing received vibration signals against baseline signature measurements may make the rules 108 more generic. Hence, the same set of rules 108 and thresholds 109 can be applied to machines with different capacities and in different environments.

Examples of features that may be included in rules 108 include the following: bearing family RMS, bearing family kurtosis, and noise floor in the bearing family of frequencies. Other features can include shaft overall energy, shaft looseness energy, energy at the fundamental frequency (1X) of a shaft, and harmonic (such as 2X, 3X, and 0.5X) energy of the fundamental frequency of a shaft. Additional features can include gear energy in GMF and its harmonics, gear energy in sidebands of gear shaft speed around GMF and its harmonics, pinion energy in sidebands of pinion shaft speed around GMF and its harmonics, noise floor around the GMF and its harmonics, and gear and pinion sidebands. In addition, features may include impeller energy in the vane pass frequency (VPF) and its harmonics, impeller energy in sidebands of shaft speed around VPF and its harmonics, noise floor around VPF and its harmonics and their shaft sidebands.

These features may depend on the configuration and makeup of the machine 104. For example, a gear configuration can be affected by the number of gear stages, as well as the number of teeth in the gear and the number of teeth in the pinion of each stage. A bearing configuration can be affected by the bearing number or the bearing geometry, such as the number of balls, the ball diameter, and the pitch circle diameter. An impeller configuration can be affected by the number of impeller stages and the number of vanes in each impeller.

These features may be saved as baseline features during the operation of a defect-free (normal) machine 104. If there is any doubt about repeatability of the baseline measurements, multiple baseline features may be averaged over a period of time. Other features not stored initially as baseline features may be divided by the respective baseline features to ascertain any progression of a fault that may have occurred. For example, if bearing energy has become a factor of 1.25 above its respective baseline value, it may be construed to mean that there is a 25 percent increase in energy from its normal operation.

The RBDS 100 may provide indicators identifying component-related conditions in any suitable manner. In some embodiments, the RBDS 100 may display the indicators on a user interface 118 for review by a user. Also, the RBDS 100 may also generate audible and/or visual alarms when certain thresholds are exceeded. In some embodiments, indicators may be provided as indexed values using words like 'Normal,' 'Warning,' and 'Alarm' or by using numerical values such as in the range of 0-1, 0-10, or 0-100, where the value generated by the RBDS 100 depends on the severity level of a fault.

The analyzer 102 includes any suitable structure for receiving and analyzing vibration signals. For example, the analyzer 102 could be implemented using hardware only or a combination of hardware and software/firmware instructions. In this example, the analyzer 102 is implemented using a computing system 110 that includes at least one memory unit 112, at least one processing unit 114, and at least one network interface 116. The at least one memory unit 112 includes any suitable volatile and/or non-volatile storage and retrieval device(s), such as a hard disk, an optical storage disc, RAM, or ROM. The at least one processing unit 114 includes any suitable processing structure(s), such as a microprocessor, microcontroller, digital signal processor, application specific integrated circuit, or field programmable gate array. The at least one network interface 116 includes any suitable structure(s) for communicating over one or more networks, such as a wired Ethernet interface or a wireless interface. This represents one specific way in which the analyzer 102 can be implemented, and other implementations of the analyzer 102 could be used. When implemented using software and/or firmware, the analyzer 102 may include any suitable program instructions that analyze vibrations of one or more machines 104.

The user interface 118 can be used to interact with the analyzer 102, such as to initiate analysis and view analysis results or alarms. The user interface 118 includes any suitable structure for providing information to a user and receiving information from the user. For example, the user interface 118 could represent a display device.

Although FIGURE 1 illustrates one example of a RBDS 100, various changes may be made to FIGURE 1. For example, the system 100 could include any number of analyzers 102, machines 104, transducers 106, rules 108, thresholds 109, computing systems 110, and user interfaces 118. Also, the functional division shown in FIGURE 1 is for illustration only. Various components in FIGURE 1 could be combined, further subdivided, or omitted and additional components could be added according to particular needs. For instance, the computing system 110 could be integrated into the user interface 118. In addition, the machine 104 could have any suitable structure with any number and arrangement of other machines.

FIGURE 2 illustrates an example process 200 for vibration analysis using one or more rules according to this disclosure. For ease of explanation, the process 200 is described with respect to the analyzer 102 of FIGURE 1, although the process 200 could be used with any suitable device or system and with any suitable machinery.

At step 202, the analyzer 102 obtains rules 108 associated with various components of a rotating machine 104 from a memory. The rules 108 may include features describing particular operating characteristics of associated components in the machine 104. For example, one rule associated with an impeller may include a feature set defining a vane pass frequency energy and a noise floor around the vane pass frequency energy. Each of the features in the impeller feature set may be associated with a particular failure mode of the impeller, such as a vane crack or excessive cavitation levels. In some embodiments, the analyzer 102 may be provided with a default set of rules that may be selectively modified for different types of machines.

At step 204, the analyzer 102 measures a baseline vibration level for the machine 104. In some embodiments, the baseline vibration level may be measured when the machine is operating in a known good state. For example, a baseline measurement may be acquired from the machine when the machine has been newly placed into service. As another example, a baseline measurement may be acquired from the machine after it has undergone a maintenance procedure in which certain components have been repaired or replaced.

At step 206, the analyzer 102 measures the vibration level of the machine 104 at some point during its serviceable life. The vibration level may be obtained using one or more vibration sensors that generate vibration signals indicative of vibrational energy of the machine. In some embodiments, the analyzer 102 may acquire measurements of other characteristics of the machine, such as electrical power usage (generation) and/or shaft speed, using other ancillary types of sensors.

At step 208, the analyzer 102 determines feature values for features associated with the rules 108. The feature values can be determined in any suitable manner, such as by using the measured vibration level of the machine 104. In some embodiments, the analyzer 102 also determines feature values using signals from the ancillary sensors. For example, the analyzer 102 may determine feature values of various shaft-related features, such as shaft imbalance, shaft misalignment, and/or bearing wear, according to knowledge of the shaft's rotational speed obtained from a tachometer.

At step 210, the analyzer 102 identifies any component-related conditions for components of the machine 104 based on the determined feature values. For example, one component-related condition may include wear of bearings that support movement of a shaft. Feature values that may be used by the analyzer 102 to determine this condition may include bearing RMS and kurtosis. These feature measurements may be combined in a manner to ascertain the condition of the bearings of the machine. This step may include the analyzer 102 applying various thresholds or limits 109 to the feature values.

At step 212, the analyzer 102 provides an indication of any identified component-related condition. The indication may be, for example, a visual indicator presented on the user interface 118. In some embodiments, the analyzer 102 may provide indexed values for each component-related condition so that a user may at least partially interpret the results provided by the analyzer 102. For example, the analyzer 102 may provide indexed values that range from '0' to '10' in which '0' indicates the lowest level of fault condition and '10' indicates the highest level of fault condition.

Although FIGURE 2 illustrates one example of a process 200 for vibration analysis using one or more rules, various changes may be made to FIGURE 2. For example, while shown as a series of steps, various steps in FIGURE 2 could overlap, occur in parallel, occur in a different order, or occur multiple times.

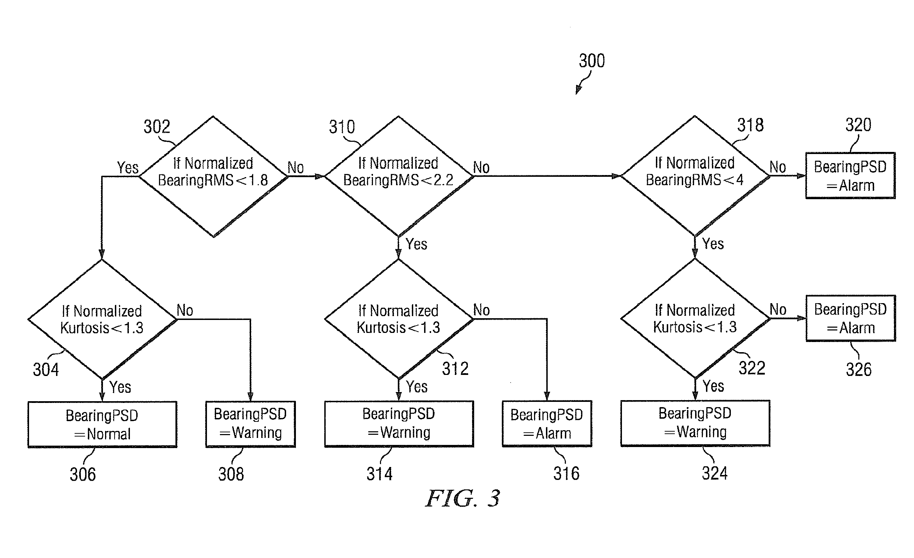

FIGURES 3 through 8 illustrate example processes for identifying specific types of faults with different types of rotating machinery according to this disclosure. The particular processes shown in FIGURES 3 through 8 could occur during step 210 of FIGURE 2. That is, the processes shown in FIGURES 3 through 8 may be performed after measurement of vibration levels of a machine at step 206 and after determination of certain feature values at step 208. These particular processes are for illustration purposes only, and other or additional processes could occur in step 210. In the following description, a fault indicator may include a numeral-indexed value within a range, such as 0-1, 0-10 or 0-100. Alternatively, an indicator may include words, such as 'normal', 'warning', and 'alarm'.

FIGURE 3 illustrates an example process 300 for determining a bearing point source defect (PSD) failure mode for one or more bearings according to this disclosure. A point source defect could generally imply that there is a crack or spalling at an inner race, outer race, ball, or cage of a bearing.

As shown in FIGURE 3, the analyzer 102 determines if a normalized bearing root-mean-squared (RMS) value is less than 1.8 at step 302. If it is, the analyzer 102 determines if a normalized kurtosis feature is less than a value of 1.3 at step 304. If so, the analyzer 102 provides a 'normal' bearing PSD indication at step 306. Otherwise, the analyzer 102 provides a 'warning' bearing PSD indication at step 308.

If the normalized bearing RMS value is not less than 1.8 at step 302, the analyzer 102 determines if the normalized bearing RMS value is less than a value of 2.2 at step 310. If it is, the analyzer 102 determines whether the normalized kurtosis feature is less than a value of 1.3 at step 312. If so, the analyzer 102 provides a 'warning' bearing PSD indication at step 314. Otherwise, the analyzer 102 provides an 'alarm' bearing PSD indication at step 316.

If the normalized bearing RMS value is not less than a value of 2.2 at step 310, the analyzer 102 determines if the normalized bearing RMS value is less than a value of 4.0 at step 318. If it is not, the analyzer 102 provides an 'alarm' bearing PSD indication at step 320. Otherwise, the analyzer 102 determines if the normalized kurtosis feature is less than a value of 1.3 at step 322. If so, the analyzer 102 provides a 'warning' bearing PSD indication at step 324. If not, the analyzer 102 provides an 'alarm' bearing PSD indication at step 326.

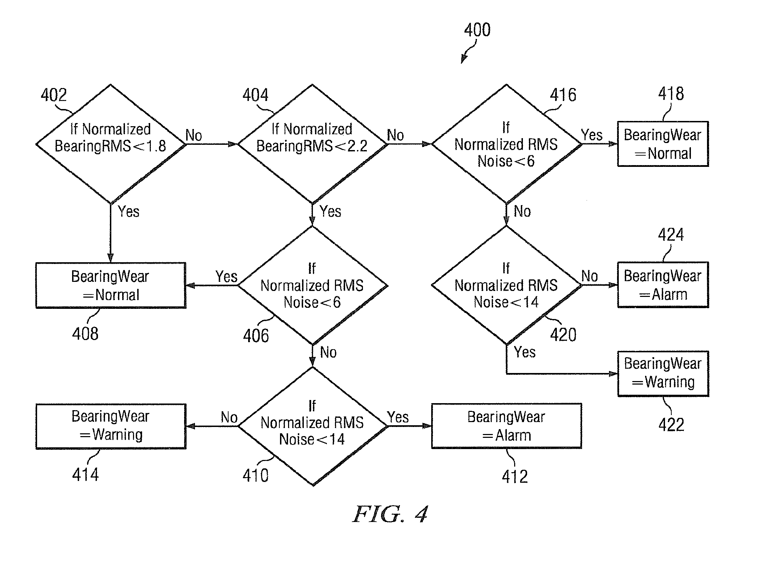

FIGURE 4 illustrates an example process 400 for determining a bearing wear failure mode for one or more bearings according to this disclosure. In some instances, bearing wear may also be termed as generalized roughness, and the process 400 could be used.

As shown in FIGURE 4, the analyzer 102 determines if a normalized bearing RMS value is less than a value of 1.8 at step 402. If it is, the analyzer 102 issues a 'normal' bearing wear indication at step 408. Otherwise, the analyzer 102 determines if the normalized bearing RMS value is less than a value of 2.2 at step 404. If it is, the analyzer 102 determines if normalized RMS noise is less than a value of 6.0 at step 406. If so, the analyzer 102 issues the 'normal' bearing wear indication at step 408. Otherwise, the analyzer 102 determines if the normalized RMS noise is less than a value of 14.0 at step 410. If so, the analyzer 102 provides an 'alarm' bearing wear indication at step 412. If not, the analyzer 102 provides a 'warning' bearing wear indication at step 414.

If the normalized bearing RMS value is not less than 2.2 at step 404, the analyzer 102 determines if the normalized RMS noise is less than a value of 6.0 at step 416. If it is, the analyzer 102 issues a 'normal' bearing wear indication at step 418. Otherwise, the analyzer 102 determines if the normalized RMS noise is less than a value of 14.0 at step 420. If so, the analyzer 102 provide a 'warning' bearing wear indication at step 422. If not, the analyzer 102 provides an 'alarm' bearing wear indication at step 424.

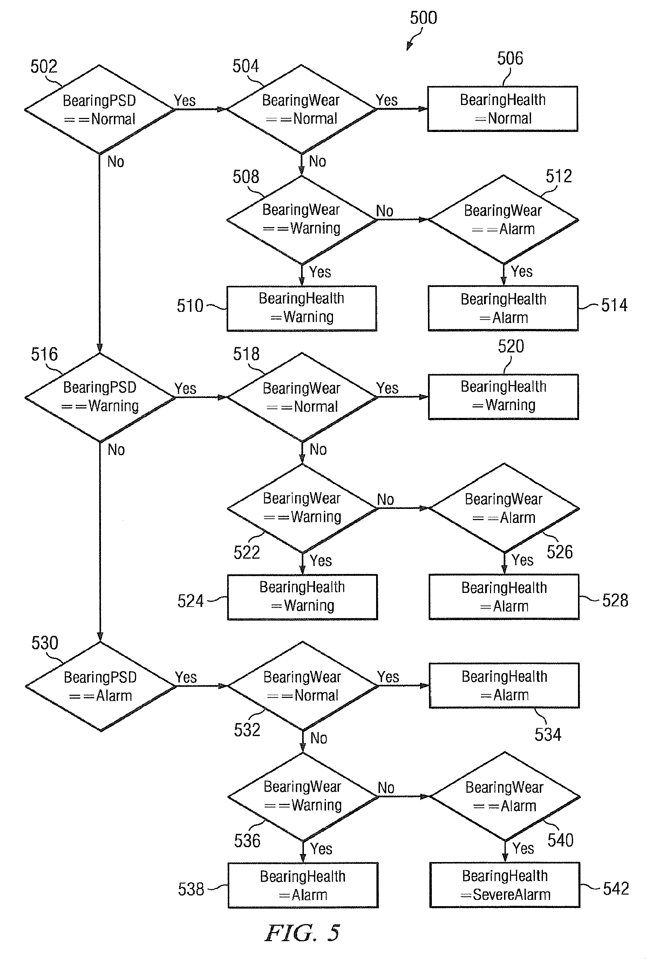

FIGURE 5 illustrates an example process 500 for combining individual component indicators of one or more bearings to determine an overall health of one or more bearings according to this disclosure. In particular, the process 500 of FIGURE 5 uses the indications from the processes 300 and 400 to determine an overall component-related condition of the bearings.

As shown in FIGURE 5, the analyzer 102 determines whether the bearing PSD indicator (determined in FIGURE 3) has a 'normal' state at step 502. If it does, the analyzer 102 determines whether the bearing wear indicator (determined in FIGURE 4) has a 'normal' state at step 504. If so, the analyzer 102 issues a 'normal' bearing health indicator at step 506. Otherwise, the analyzer 102 determines whether the bearing wear indicator has a 'warning' state at step 508. If so, the analyzer 102 issues a 'warning' bearing health indicator at step 510. Otherwise, the analyzer 102 determines whether the bearing wear indicator has an 'alarm' state at step 512. If so, the analyzer 102 issues an 'alarm' bearing health indicator at step 514.

If the bearing PSD indicator does not have a 'normal' state at step 502, the analyzer 102 determines whether the bearing PSD indicator has a 'warning' state at step 516. If it does, the analyzer 102 determines whether the bearing wear indicator has a 'normal' state at step 518. If so, the analyzer 102 issues a 'warning' bearing health indicator at step 520. Otherwise, the analyzer 102 determines whether the bearing wear indicator has a 'warning' state at step 522. If so, the analyzer 102 issues a 'warning' bearing health indicator at step 524. Otherwise, the analyzer 102 determines whether the bearing wear indicator has an 'alarm' state at step 526. If so, the analyzer 102 issues an 'alarm' bearing health indicator at step 528.

If the bearing PSD indicator does not have a 'warning' state at step 516, the analyzer 102 determines whether the bearing PSD indicator has an 'alarm' state at step 530. If it does, the analyzer 102 determines whether the bearing wear indicator has a 'normal' state at step 532. If so, the analyzer 102 issues an 'alarm' bearing health indicator at step 534. Otherwise, the analyzer 102 determines whether the bearing wear indicator has a 'warning' state at step 536. If so, the analyzer 102 issues an 'alarm' bearing health indicator at step 538. Otherwise, the analyzer 102 determines whether the bearing wear indicator has an 'alarm' state at step 540. If so, the analyzer 102 issues a 'severe alarm' bearing health indicator at step 542.

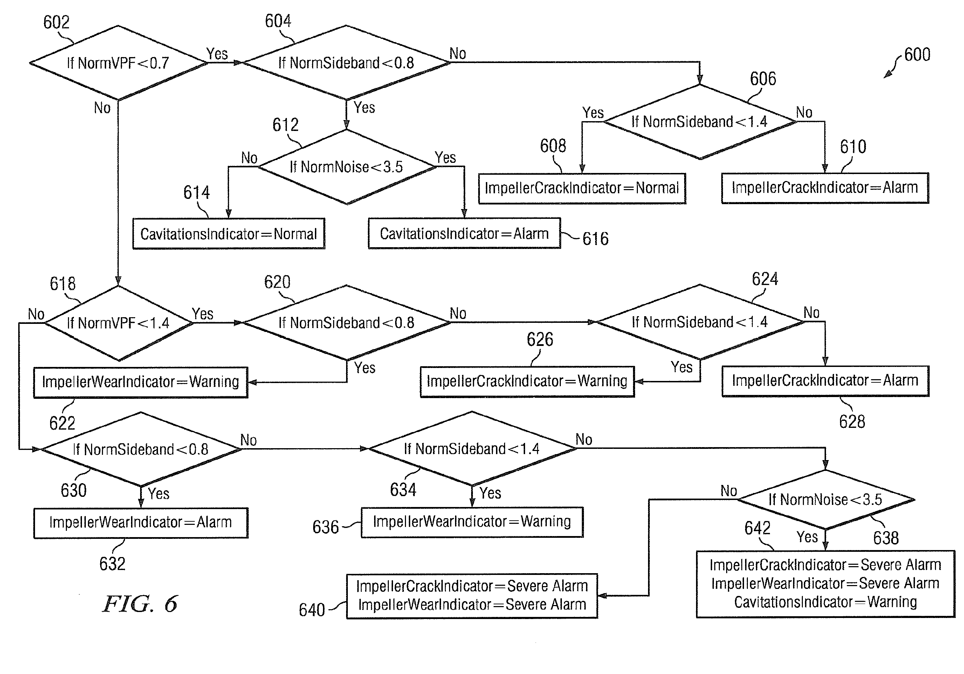

FIGURE 6 illustrates an example process 600 for determining an overall health of an impeller according to this disclosure. In general, impeller-related rules 108 can take inputs of vibration energy generated by an impeller, such as vane pass frequency (VPF) and its harmonics, energy in shaft sidebands of the impeller VPF, and energy in a noise floor of impeller-related frequencies. The analyzer 102 may provide various health indicators, such as an impeller crack indicator, an impeller wear indicator, and a cavitations indicator. These indicators may be integrated to generate an overall impeller health degradation indicator.

As shown in FIGURE 6, the analyzer 102 determines whether a normalized VPF feature of an impeller is less than a value of 0.7 at step 602. If it is, the analyzer 102 determines if a normalized sideband feature is less than a value of 0.8 at step 604. If not, the analyzer 102 determines whether the normalized sideband feature is less than a value of 1.4 at step 606. If it is, the analyzer 102 issues a 'normal' impeller crack indicator at step 608. Otherwise, the analyzer 102 issues an 'alarm' impeller crack indicator at step 610.

If the normalized sideband feature is less than a value of 0.8 at step 604, the analyzer 102 determines whether normalized noise is less than a value of 3.5 at step 612. If not, the analyzer 102 issues a 'normal' cavitations indicator at step 614. Otherwise, the analyzer 102 issues an 'alarm' cavitations indicator at step 616.

If the normalized VPF feature of the impeller is not less than a value of 0.7 at step 602, the analyzer 102 determines whether the normalized VPF feature is less than a value of 1.4 at step 618. If so, the analyzer 102 determines whether the normalized sideband feature is less than a value of 0.8 at step 620. If so, the analyzer 102 issues a 'warning' impeller wear indicator at step 622. Otherwise, the analyzer 102 determines whether the normalized sideband feature is less than a value of 1.4 at step 624. If so, the analyzer 102 issues a 'warning' impeller crack indicator at step 626. If not, the analyzer 102 issues an 'alarm' impeller crack indicator at step 628.

If the normalized VPF feature is not less than the value of 1.4 at step 618, the analyzer 102 determines whether the normalized sideband feature is less than a value of 0.8 at step 630. If so, the analyzer 102 issues an 'alarm' impeller wear indicator at step 632. Otherwise, the analyzer 102 determines whether the normalized sideband feature is less than a value of 1.4 at step 634. If so, the analyzer 102 issues a 'warning' impeller wear indicator at step 636. If not, the analyzer 102 determines whether the normalized noise feature is less than a value of 3.5 at step 638. If it is not, the analyzer 102 issues a 'severe alarm' impeller crack indicator and a 'severe alarm' impeller wear indicator at step 640. If it is, the analyzer 102 issues a 'severe alarm' impeller crack indicator, a 'severe alarm' impeller wear indicator, and a 'warning' cavitations indicator at step 642.

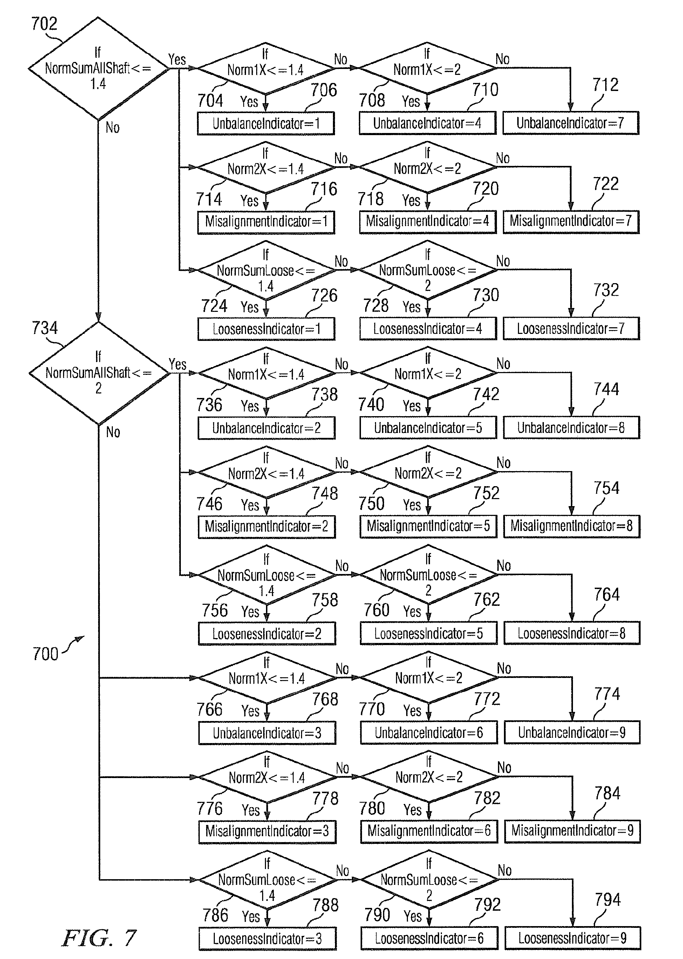

FIGURE 7 illustrates an example process 700 for providing fault indicators for a shaft according to this disclosure. A shaft fault indicator may be determined according to any type of shaft features. Here, shaft fault indicators are determined according to normalized vibration energy at a fundamental frequency of the shaft (1X), normalized energy at a second harmonic (2X) of the fundamental frequency, normalized looseness energy, and normalized shaft-related energy. The analyzer 102 may provide various health indicators, such as an unbalance indicator, a misalignment indicator, and a looseness indicator.

As shown in FIGURE 7, the analyzer 102 determines whether a normalized summation of shaft features is less than or equal to a value of 1.4 at step 702. If so, processing continues at steps 704, 714, and 724. At step 704, the analyzer 102 determines whether a normalized vibration energy feature at the fundamental frequency of the shaft is less than or equal to a value of 1.4. If so, the analyzer 102 issues an unbalance indicator having a value of '1' at step 706. Otherwise, the analyzer 102 determines whether the normalized vibration energy feature at the fundamental frequency of the shaft is less than or equal to a value of 2.0 at step 708. If so, the analyzer 102 issues an unbalance indicator having a value of '4' at step 710. Otherwise, the analyzer 102 issues an unbalance indicator having a value of '7' at step 712.

At step 714, the analyzer 102 determines whether a normalized vibration energy feature at the second harmonic is less than or equal to a value of 1.4. If so, the analyzer 102 issues a misalignment indicator having a value of '1' at step 716. Otherwise, the analyzer 102 determines whether the normalized vibration energy feature at the second harmonic is less than or equal to a value of 2.0 at step 718. If so, the analyzer 102 issues a misalignment indicator having a value of '4' at step 720. Otherwise, the analyzer 102 issues a misalignment indicator having a value of '7' at step 722.

At step 724, the analyzer 102 determines if a normalized summation of looseness condition is less than or equal to a value of 1.4. If so, the analyzer 102 issues a looseness indicator having a value of '1' at step 726. Otherwise, the analyzer 102 determines if the normalized summation of looseness condition is less than or equal to a value of 2.0 at step 728. If so, the analyzer 102 issues a looseness indicator having a value of '4' at step 730. Otherwise, the analyzer 102 issues a looseness indicator having a value of '7' at step 732.

If the normalized summation of shaft features is greater than a value of 1.4 at step 702, the analyzer 102 determines whether the normalized summation of shaft features is less than or equal to a value of 2.0 at step 734. If so, processing continues at steps 736, 746, and 756. If not, processing continues at steps 766, 776, and 786.

At step 736, the analyzer 102 determines whether the normalized vibration energy feature at the fundamental frequency of the shaft is less than or equal to a value of 1.4. If so, the analyzer 102 issues an unbalance indicator having a value of '2' at step 738. Otherwise, the analyzer 102 determines whether the normalized vibration energy feature at the fundamental frequency of the shaft is less than or equal to a value of 2.0 at step 740. If so, the analyzer 102 issues an unbalance indicator having a value of '5' at step 742. Otherwise, the analyzer 102 issues an unbalance indicator having a value of '8' at step 744.

At step 746, the analyzer 102 determines whether the normalized vibration energy feature at the second harmonic is less than or equal to a value of 1.4. If so, the analyzer 102 issues a misalignment indicator having a value of '2' at step 748. Otherwise, the analyzer 102 determines whether the normalized vibration energy feature at the second harmonic is less than or equal to a value of 2.0 at step 750. If so, the analyzer 102 issues a misalignment indicator having a value of '5' at step 752. Otherwise, the analyzer 102 issues a misalignment indicator having a value of '8' at step 754.

At step 756, the analyzer 102 determines if the normalized summation of looseness condition is less than or equal to a value of 1.4. If so, the analyzer 102 issues a looseness indicator having a value of '2' at step 758. Otherwise, the analyzer 102 determines if the normalized summation of looseness condition is less than or equal to a value of 2.0 at step 760. If so, the analyzer 102 issues a looseness indicator having a value of '5' at step 762. Otherwise, the analyzer 102 issues a looseness indicator having a value of '8' at step 764.

At step 766, the analyzer 102 determines whether the normalized vibration energy feature at the fundamental frequency of the shaft is less than or equal to a value of 1.4. If so, the analyzer 102 issues an unbalance indicator having a value of '3' at step 768. Otherwise, the analyzer 102 determines whether the normalized vibration energy feature at the fundamental frequency of the shaft is less than or equal to a value of 2.0 at step 770. If so, the analyzer 102 issues an unbalance indicator having a value of '6' at step 772. Otherwise, the analyzer 102 issues an unbalance indicator having a value of '9' at step 774.

At step 776, the analyzer 102 determines whether the normalized vibration energy feature at the second harmonic is less than or equal to a value of 1.4. If so, the analyzer 102 issues a misalignment indicator having a value of '3' at step 778. Otherwise, the analyzer 102 determines whether the normalized vibration energy feature at the second harmonic is less than or equal to a value of 2.0 at step 780. If so, the analyzer 102 issues a misalignment indicator having a value of '6' at step 782. Otherwise, the analyzer 102 issues a misalignment indicator having a value of '9' at step 784.

At step 786, the analyzer 102 determines if the normalized summation of looseness condition is less than or equal to a value of 1.4. If so, the analyzer 102 issues a looseness indicator having a value of '3' at step 788. Otherwise, the analyzer 102 determines if the normalized summation of looseness condition is less than or equal to a value of 2.0 at step 790. If so, the analyzer 102 issues a looseness indicator having a value of '6' at step 792. Otherwise, the analyzer 102 issues a looseness indicator having a value of '9' at step 794.

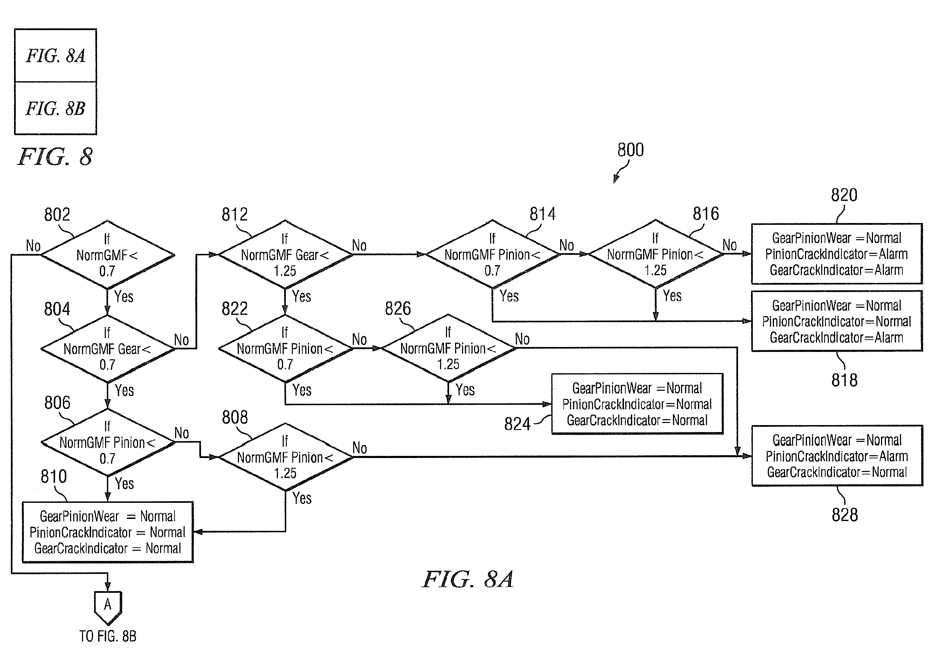

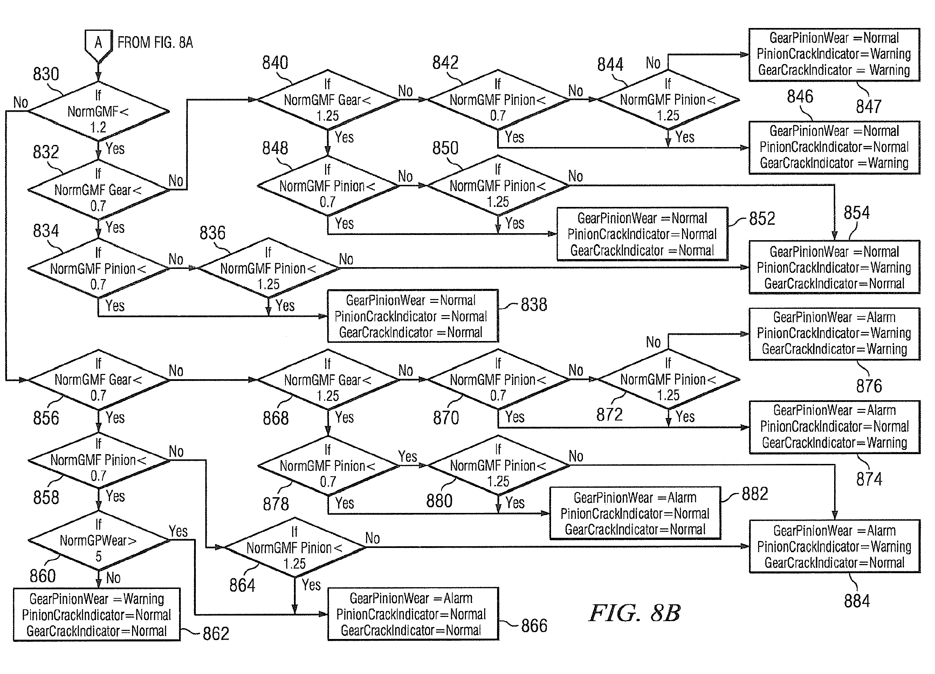

FIGURE 8 illustrates an example process 800 for providing fault indicators for a gearbox according to this disclosure. A gearbox fault indicator may be determined according to any type of shaft features. Here, gearbox fault indicators are determined according to features including normalized energy in a gear mesh frequency (GMF) and its harmonics, normalized energy in gear shaft sidebands of the GMF and its harmonics, normalized energy in pinion shaft sidebands of the GMF and its harmonics, and a noise floor around the gear-related frequencies.

As shown in FIGURE 8, the analyzer 102 determines if a normalized GMF feature is less than a value of 0.7 at step 802. If so, the analyzer 102 determines if a normalized GMF feature of the gear is less than a value of 0.7 at step 804. If so, the analyzer 102 determines if a normalized GMF feature of the pinion is less than a value of 0.7 at step 806. If so, the analyzer 102 issues a 'normal' gear pinion wear indictor, a 'normal' pinion crack indicator, and a 'normal' gear crack indicator at step 810. Otherwise, the analyzer 102 determines if the normalized GMF feature of the pinion is less than a value of 1.25 at step 808. If so, the analyzer 102 issues a 'normal' gear pinion wear indictor, a 'normal' pinion crack indicator, and a 'normal' gear crack indicator at step 810. If not, the analyzer 102 issues a 'normal' gear pinion wear indictor, an 'alarm' pinion crack indicator, and a 'normal' gear crack indicator at step 828.

If the normalized GMF feature of the gear is not less than a value of 0.7 at step 804, the analyzer 102 determines if the normalized GMF feature of the gear is less than a value of 1.25 at step 812. If not, the analyzer 102 determines if the normalized GMF feature of the pinion is less than a value of 0.7 at step 814. If so, the analyzer 102 issues a 'normal' gear pinion wear indictor, a 'normal' pinion crack indicator, and an 'alarm' gear crack indicator at step 818. Otherwise, the analyzer 102 determines if the normalized GMF feature of the pinion is less than a value of 1.25 at step 816. If so, the analyzer 102 issues a 'normal' gear pinion wear indictor, a 'normal' pinion crack indicator, and an 'alarm' gear crack indicator at step 818. If not, the analyzer 102 issues a 'normal' gear pinion wear indictor, an 'alarm' pinion crack indicator, and an 'alarm' gear crack indicator at step 820.

If the normalized GMF feature of the gear is less than a value of 1.25 at step 812, the analyzer 102 determines if the normalized GMF feature of the pinion is less than a value of 0.7 at step 822. If so, the analyzer 102 issues a 'normal' gear pinion wear indictor, a 'normal' pinion crack indicator, and a 'normal' gear crack indicator at step 824. Otherwise, the analyzer 102 determines if the normalized GMF feature of the pinion is less than a value of 1.25 at step 826. If so, the analyzer 102 issues a 'normal' gear pinion wear indictor, a 'normal' pinion crack indicator, and a 'normal' gear crack indicator at step 824. If not, the analyzer 102 issues a 'normal' gear pinion wear indictor, an 'alarm' pinion crack indicator, and a 'normal' gear crack indicator at step 828.

If the normalized GMF feature is not less than a value of 0.7 at step 802, the analyzer 102 determines if the normalized GMF feature is less than a value of 1.2 at step 830. If so, the analyzer 102 determines if the normalized GMF feature of the gear is less than a value of 0.7 at step 832. If so, the analyzer 102 determines if the normalized GMF feature of the pinion is less than a value of 0.7 at step 834. If so, the analyzer 102 issues a 'normal' gear pinion wear indictor, a 'normal' pinion crack indicator, and a 'normal' gear crack indicator at step 838. Otherwise, the analyzer 102 determines if the normalized GMF feature of the pinion is less than a value of 1.25 at step 836. If so, the analyzer 102 issues a 'normal' gear pinion wear indictor, a 'normal' pinion crack indicator, and a 'normal' gear crack indicator at step 838. If not, the analyzer 102 issues a 'normal' gear pinion wear indictor, a 'warning' pinion crack indicator, and a 'normal' gear crack indicator at step 854.

If the normalized GMF feature of the gear is not less than a value of 0.7 at step 832, the analyzer 102 determines if the normalized GMF feature of the gear is less than a value of 1.25 at step 840. If not, the analyzer 102 determines if the normalized GMF feature of the pinion is less than a value of 0.7 at step 842. If so, the analyzer 102 issues a 'normal' gear pinion wear indictor, a 'normal' pinion crack indicator, and a 'warning' gear crack indicator at step 846. Otherwise, the analyzer 102 determines if the normalized GMF feature of the pinion is less than a value of 1.25 at step 844. If so, the analyzer 102 issues a 'normal' gear pinion wear indictor, a 'normal' pinion crack indicator, and a 'warning' gear crack indicator at step 846. If not, the analyzer 102 issues a 'normal' gear pinion wear indictor, a 'warning' pinion crack indicator, and a 'warning' gear crack indicator at step 847.

If the normalized GMF feature of the gear is less than a value of 1.25 at step 840, the analyzer 102 determines if the normalized GMF feature of the pinion is less than a value of 0.7 at step 848. If so, the analyzer 102 issues a 'normal' gear pinion wear indictor, a 'normal' pinion crack indicator, and a 'normal' gear crack indicator at step 852. Otherwise, the analyzer 102 determines if the normalized GMF feature of the pinion is less than a value of 1.25 at step 850. If so, the analyzer 102 issues a 'normal' gear pinion wear indictor, a 'normal' pinion crack indicator, and a 'normal' gear crack indicator at step 852. If not, the analyzer 102 issues a 'normal' gear pinion wear indictor, a 'warning' pinion crack indicator, and a 'normal' gear crack indicator at step 854.

If the normalized GMF feature is not less than a value of 1.2 at step 830, the analyzer 102 determines if the normalized GMF feature of the gear is less than a value of 0.7 at step 856. If so, the analyzer 102 determines if the normalized GMF feature of the pinion is less than a value of 0.7 at step 858. If so, the analyzer 102 determines if a normalized gear pinion wear value is greater than a value of 5.0 at step 860. If not, the analyzer 102 issues a 'warning' gear pinion wear indictor, a 'normal' pinion crack indicator, and a 'normal' gear crack indicator at step 862. Otherwise, the analyzer 102 issues an 'alarm' gear pinion wear indictor, a 'normal' pinion crack indicator, and a 'normal' gear crack indicator at step 866. If the normalized GMF feature of the pinion is not less than a value of 0.7 at step 858, the analyzer 102 determines if the normalized GMF feature of the pinion is less than a value of 1.25 at step 864. If so, the analyzer 102 issues an 'alarm' gear pinion wear indictor, a 'normal' pinion crack indicator, and a 'normal' gear crack indicator at step 866. If not, the analyzer 102 issues an 'alarm' gear pinion wear indictor, a 'warning' pinion crack indicator, and a 'normal' gear crack indicator at step 884.

If the normalized GMF feature of the gear is not less than a value of 0.7 at step 856, the analyzer 102 determines if the normalized GMF feature of the gear is less than a value of 1.25 at step 868. If not, the analyzer 102 determines if the normalized GMF feature of the pinion is less than a value of 0.7 at step 870. If not, the analyzer 102 determines if the normalized GMF feature of the pinion is less than a value of 1.25 at step 872. If so, the analyzer 102 issues an 'alarm' gear pinion wear indictor, a 'normal' pinion crack indicator, and a 'warning' gear crack indicator at step 874. If not, the analyzer 102 issues an 'alarm' gear pinion wear indictor, a 'warning' pinion crack indicator, and a 'warning' gear crack indicator at step 876.

If the normalized GMF feature of the gear is less than a value of 1.25 at step 868, the analyzer 102 determines if the normalized GMF feature of the pinion is less than a value of 0.7 at step 878. If so, the analyzer 102 issues an 'alarm' gear pinion wear indictor, a 'normal' pinion crack indicator, and a 'normal' gear crack indicator at step 882. Otherwise, the analyzer 102 determines if the normalized GMF feature of the pinion is less than a value of 1.25 at step 880. If so, the analyzer 102 issues an 'alarm' gear pinion wear indictor, a 'normal' pinion crack indicator, and a 'normal' gear crack indicator at step 882. If not, the analyzer 102 issues an 'alarm' gear pinion wear indictor, a 'warning' pinion crack indicator, and a 'normal' gear crack indicator at step 884.

Although FIGURES 3 through 8 illustrate examples of processes for identifying specific types of faults with different types of rotating machinery, various changes may be made to FIGURES 3 through 8. For example, the analyzer 102 could be configured to generate health indicators for other types of components, such as structural support members of a machine, valves, or stator windings of a generator. Also, specific limits and threshold values are used here, and specific values for health indicators are provided. These are for illustration and explanation only and do not limit the scope of this disclosure. In addition, various steps in each figure could overlap, occur in parallel, occur in a different order, or occur multiple times.

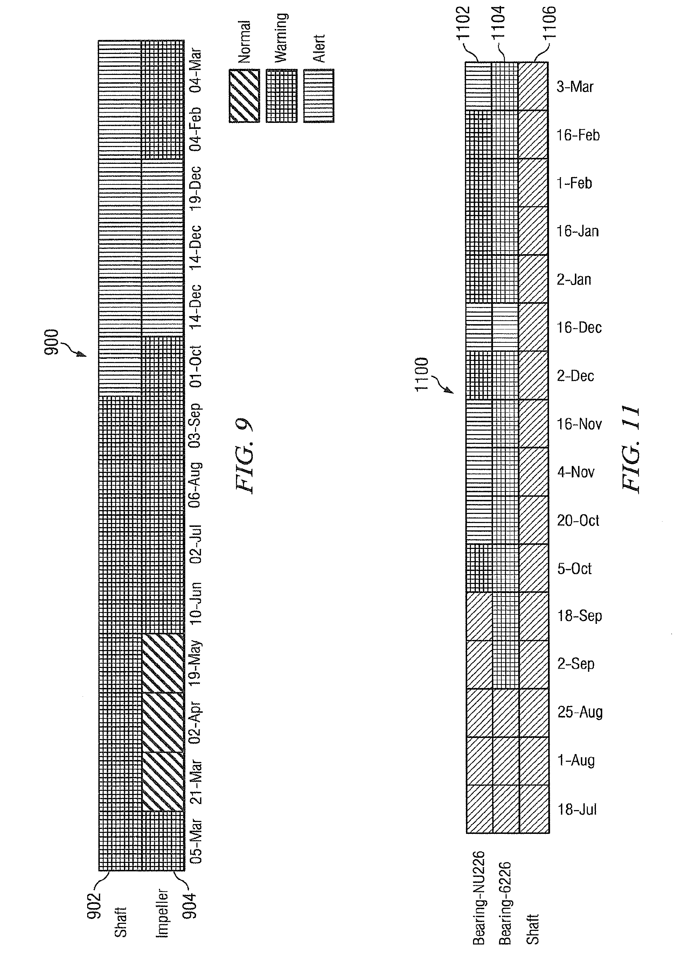

FIGURES 9 through 11 illustrate example health indicators for different types of rotating machinery according to this disclosure. FIGURE 9 illustrates an example chart 900 showing health indicators for a cooling water pump. The health indicators in FIGURE 9 could be generated by the analyzer 102 of FIGURE 1. In this example, the health indicators include shaft health indicators 902 and impeller health indicators 904 over a twelve-month period of time. As shown in FIGURE 9, the cooling water pump has an impeller unbalance problem because both the shaft health indicators 902 and the impeller health indicators 904 are in an alarming condition during the same period of time.

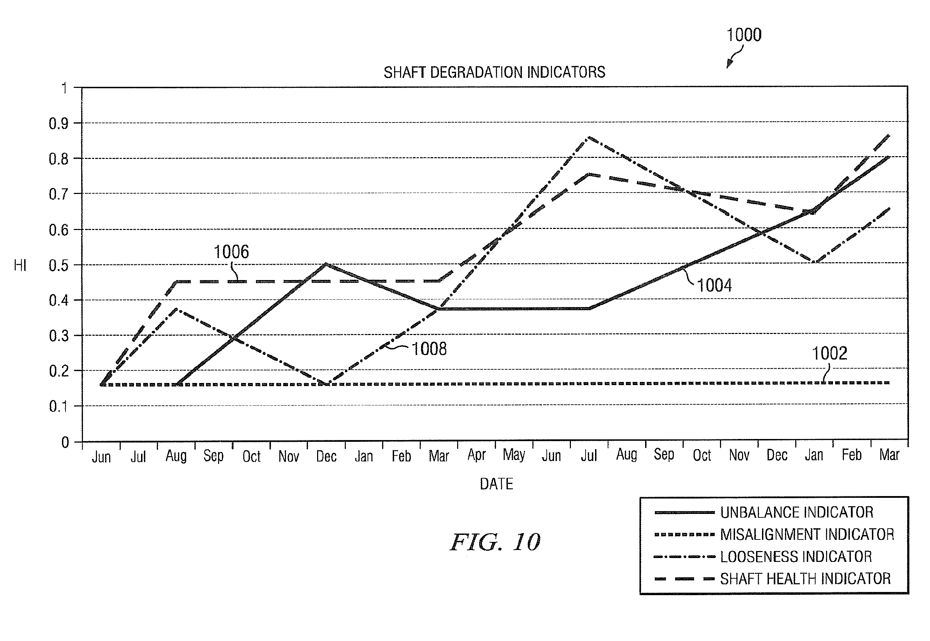

FIGURE 10 illustrates an example graph 1000 showing plots representing various health indicators for an ash hopper pump having an approximate 150 horse-power capacity. Again, the health indicators could be generated by the analyzer 102 of FIGURE 1. In this example, the graph 1000 includes a misalignment indicator plot 1002, a looseness indicator plot 1004, an unbalance indicator plot 1006, and an overall shaft health indicator plot 1008.

As shown in FIGURE 10, the heath indicators 1004-1008 show a gradual progression of their respective faults, a characteristic that may be generally attributed to a rotating machine and its associated components degrading and/or wearing over an extended period of time. This gradual progression of health indicators may contrast significantly with those provided by conventional vibration analysis systems, which typically do not show gradual progression of faults over time.

FIGURE 11 illustrates an example chart 1100 showing health indicators for a forced draught fan. Once again, the health indicators could be generated by the analyzer 102 of FIGURE 1. This particular fan has a capacity of approximately 400kW and a 1,490RPM rated speed. The fan, which can be used in power plants, has two bearings at the driving end of a motor.

The health indicators shown in FIGURE 11 include two bearing health indicators 1102 and 1104 and a shaft health indicator 1106 during a sixteen-month period of time. As shown in FIGURE 11, the bearing associated with the health indicator 1102 goes into an alarming state, subsides for a period of time, and then again resurfaces. The bearing associated with the health indicator 1104 is at a 'warning' state for most of the time. Conversely, the shaft associated with the shaft health indicator is at a normal state over the entire period of time.

Although FIGURES 9 through 11 illustrate examples of health indicators for different types of rotating machinery, various changes may be made to FIGURES 9 through 11. For example, FIGURES 9 through 11 merely show several example machines that can be analyzed using the analyzer 102 of FIGURE 1. Other types of machines may be analyzed, such as a gas/steam turbine in which its motive force is provided by fuel (like gasoline, diesel fuel, or natural gas). Also, the results in FIGURES 9 through 11 are specific to particular implementations of machines, and the same or similar machines could have different analysis results.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. As an example, some embodiments of the rule-based diagnostic system 100 may include an analyzer 102 configured in an embedded device, such as a handheld device that transmits wired or wireless signals to a remotely configured device. The transmitted signals could be short messaging service (SMS) messages or e-mail messages. Information in the transmitted messages may include alarms having an indexed value (such as 0-10) or textual values (such as 'normal', 'warning', or 'critical').

It may be advantageous to set forth definitions of certain words and phrases used throughout this patent document. The term "couple" and its derivatives refer to any direct or indirect communication between two or more elements, whether or not those elements are in physical contact with one another. The terms "include" and "comprise," as well as derivatives thereof, mean inclusion without limitation. The term "or" is inclusive, meaning and/or. The phrases "associated with" and "associated with therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method comprising:
obtaining (202) information associated with a machine (104) having one or more components, wherein the information comprises multiple rules (108) associated with the one or more components;
receiving (206) measurements of a vibration level of the machine;
generating (208), based on the measurements, one or more feature values for one or more features associated with the one or more components;
determining (210) a component-related condition for the one or more components based on the one or more feature values and the rules; and
providing (212) an indicator identifying the component-related condition.

2. The method of Claim 1, further comprising:
identifying one or more threshold values (109) associated with one of the rules; and
storing the rule and the one or more associated threshold values in a memory (112).

3. The method of Claim 1, further comprising:
determining (204) a baseline vibration level for the machine;
wherein determining the component-related condition comprises determining the component-related condition using the baseline vibration level.

4. An apparatus comprising:
at least one memory unit (112) configured to store information associated with a machine (104) having one or more components, wherein the information comprises multiple rules (108) associated with the one or more components; and
at least one processing unit (114) operable to:
receive measurements of a vibration level of the machine;
generate, based on the measurements, one or more feature values for one or more features associated with the one or more components;
determine a component-related condition for the one or more components based on the one or more feature values and the rules; and
provide an indicator identifying the component-related condition.

5. The apparatus of Claim 4, wherein the component-related condition comprises a failure mode of the component.

6. The apparatus of Claim 4, wherein each rule comprises one or more threshold values (109).

7. The apparatus of Claim 4, wherein the at least one processing unit is operable to generate the one or more feature values using the measurements of the vibration level and using signals from one or more ancillary sensors (106) coupled to the machine.

8. The apparatus of Claim 4, wherein:
the at least one processing unit is further operable to determine a baseline vibration level for the machine; and
the at least one processing unit is operable to determine the component-related condition using the baseline vibration level.

9. The apparatus of Claim 4, wherein the rules are associated with at least one of: a bearing, an impeller, a shaft, and a gearbox.

10. A computer readable medium embodying a computer program, the computer program comprising computer readable program code for:
obtaining (202) information associated with a machine (104) having one or more components, wherein the information comprises multiple rules (108) associated with the one or more components;
receiving (206) measurements of a vibration level of the machine;
generating (208), based on the measurements, one or more feature values for one or more features associated with the one or more components;
determining (210) a component-related condition for the one or more components based on the one or more feature values and the rules; and
providing (212) an indicator identifying the component-related condition.
